# EUROPEAN PATENT SPECIFICATION

(11) **EP 3 851 900 B1**
(45) Date of publication and mention of the grant of the patent: **03.07.2024**
(21) Application number: 19860489.4
(22) Date of filing: 10.09.2019
(51) Int. Cl.: G02C 7/04, C08F 220/28, G02B 1/04

(54) **MONOMER COMPOSITION FOR CONTACT LENS, POLYMER THEREOF, CONTACT LENS, AND PRODUCTION METHOD THEREOF**
MONOMERZUSAMMENSETZUNG FÜR KONTAKTLINSEN, POLYMER DARAUS, KONTAKTLINSE UND HERSTELLUNGSVERFAHREN DAFÜR
COMPOSITION DE MONOMÈRE DESTINÉE À UNE LENTILLE DE CONTACT, POLYMÈRE ASSOCIÉ, ET LENTILLE DE CONTACT ET SON PROCÉDÉ DE PRODUCTION

(30) Priority: 14.09.2018 JP 2018172142
(43) Date of publication of application: 21.07.2021
(73) Proprietor: NOF Corporation, Shibuya-ku Tokyo 150-6019 (JP)
(72) Inventor: MATSUOKA, Yosuke, Kawasaki-shi, Kanagawa 210-0865 (JP); GOTANDA, Ryuya, Kawasaki-shi, Kanagawa 210-0865 (JP); TAKASHIMA, Shu, Kawasaki-shi, Kanagawa 210-0865 (JP); HARATA, Eiji, Kawasaki-shi, Kanagawa 210-0865 (JP)
(74) Representative: HWP Intellectual Property
(86) International application number: PCT/JP2019/035530
(87) International publication number: WO 2020/054711

(56) References cited:
- WO-A1-2010/104000
- WO-A1-2017/073739
- WO-A1-2018/135421
- WO-A1-2018/135421
- WO-A1-2019/194264
- US-A1- 2011 319 583

## Description

### TECHNICAL FIELD

The present invention relates to a monomer composition for contact lens, a polymer thereof, a highly flexible contact lens that contains the polymer and has good mold peelability and excellent elongation at break, and a production method thereof.

### BACKGROUND ART

A conventional type hydrogel contact lens has insufficient oxygen supply to the cornea of an eye, which has a problem in safety when worn for a long time. A silicone hydrogel contact lens has been developed as a contact lens that solves this drawback and improves the safety. However, a production method of a contact lens disadvantageously makes it difficult to make the surface of the silicone hydrogel contact lens hydrophilic. That is, when the silicone hydrogel contact lens is produced by a cast molding method using a polypropylene mold, which is a general production method of a soft contact lens, a raw material silicone monomer is polymerized in an oriented state at an interface with the mold because polypropylene is hydrophobic. As a result, a silicone polymer moiety is present on the surface of the lens, which causes low hydrophilicity of the surface of the lens.

When the hydrophilicity of the surface of the soft contact lens is not sufficient, the adhesion of lipids and proteins and the like may cause the white turbidity of the lens, and the deposits may cause eye diseases. Therefore, after the formation of a silicone hydrogel contact lens having insufficient hydrophilicity, the surface of the silicone hydrogel contact lens is subjected to a plasma gas, is coated with a hydrophilic polymer, or is subjected to surface graft polymer formation using a hydrophilic monomer. However, these surface treatments are not desirable in mass production because they require more devices and steps for producing the soft contact lens than those in a case that does not require the surface treatments.

Therefore, for the purpose of improving the hydrophobicity of the surface of a soft contact lens containing a silicone-containing copolymer, the use of a hydrophilic monomer having a vinyl group such as N,N-dimethylacrylamide, N-vinyl-2-pyrrolidone, N-methyl-N-vinylacetamide, or N-vinylpyrrolidinone has been proposed. However, even if such a hydrophilic monomer is used, the hydrophilicity of the surface of the lens cannot be said to be sufficient.

Patent Literature 1 discloses a method for producing a lens from a composition for silicone hydrogel containing a silicone monomer having a (meth)acryloyl group, a hydrophilic monomer having a vinyl group, a crosslinkable monomer, and a polymerization initiator having a 10-hour half-life temperature of 70°C to 100°C. This method aims to improve the hydrophilicity of the surface of the lens utilizing a difference between the polymerization properties of raw material monomers, but it still cannot provide satisfactory hydrophilicity.

Patent Literature 2 discloses a monomer composition for contact lens containing a phosphorylcholine group-containing (meth)acrylic ester monomer, a (meth)acrylic ester silicone monomer having a hydroxyl group, and a crosslinker. Patent Literature 3 discloses a silicone hydrogel contact lens obtained from a composition containing 2-methacryloyloxyethyl phosphorylcholine (MPC), a dimethacryloyl silicone macromer, and (3-methacryloxy-2-hydroxypropyloxy)propylbis(trimethylsiloxy)methylsilane (SiGMA). Patent Literature 4 discloses a contact lens obtained from a composition containing a phosphorylcholine or carboxybetaine group-containing (meth)acrylic ester monomer, a (meth)acrylic ester silicone monomer having a secondary hydroxyl group, a (meth)acrylic ester cyclic silicone monomer having no hydroxyl group, and a maleic acid or fumaric acid diester silicone monomer having an alkyl fluoride group. However, the contact lenses according to Patent Literatures 2 to 4 have improved lens surface hydrophilicity, but the contact lenses may have deteriorated oxygen permeability.

Patent Literature 5 discloses a composition containing a phosphorylcholine group-containing (meth)acrylic ester monomer, a (meth)acrylic ester silicone monomer having a hydroxyl group, and a silicone (meth)acrylate, a polymer of the composition being capable of being utilized for contact lenses. Patent Literatures 6 and 7 disclose a composition containing a siloxanyl group-containing itaconic acid diester monomer having a primary hydroxyl group and MPC, a polymer the composition being capable of being utilized for contact lenses. In Patent Literatures 5 to 7, good results are obtained in terms of the hydrophilicity and oxygen permeability of the surface of the lens.

### CITATION LIST

### PATENT LITERATURE

Patent Literature 1: International Publication No. 2015/001811
Patent Literature 2: Japanese Unexamined Patent Publication No. 2007-009060
Patent Literature 3: Japanese Unexamined Patent Publication No. 2014-089477
Patent Literature 4: Japanese Unexamined Patent Publication No. 2007-056220
Patent Literature 5: Japanese Unexamined Patent Publication No. 2007-197513
Patent Literature 6: International Publication No. 2010/104000
Patent Literature 7: International Publication No. 2018/135421

### SUMMARY OF INVENTION

### TECHNICAL PROBLEM

However, the contact lenses according to Patent Literatures 5 to 7 are good in terms of the hydrophilicity and oxygen permeability of the surface of the lens, but no elongation at break is described, and therefore, there is room for improvement. There is also room for improvement in demolding property from a hydrophobic mold.

An object of the present invention is to provide a contact lens that, even when produced using a hydrophobic mold made of polypropylene or the like, can be demolded with high yield and that can exhibit excellent elongation at break and comfort during wearing. The phrase "demolded with high yield" means that no cracks and the like occur in 70% or more of polymers in a step of separating the polymers from a polymer mold to be described in detail in Examples. The phrase "exhibit excellent elongation at break" means that elongation at break is 200% or more in mechanical strength measurement to be described in detail in Examples.

Another object of the present invention is to provide a monomer composition and a polymer that can be suitably used for obtaining the contact lens.

Still another object of the present invention is to provide a production method for obtaining a contact lens using the polymer.

### SOLUTION TO PROBLEM

As a result of diligent studies, the present inventors found that a monomer composition containing two types of hydrophilic monomers and two types of siloxanyl group-containing silicone monomers is used as raw materials for contact lens, and the composition ratio of these monomers is adjusted within a specific range to allow all the above objects to be achieved, and completed the present invention.

According to one embodiment of the present invention, provided is a monomer composition for contact lens, containing: a phosphorylcholine group-containing methacrylic ester monomer (A) represented by the following formula (1); one or more hydroxyl group-containing monomers (B) selected from the group consisting of hydroxyethyl (meth)acrylate, hydroxypropyl (meth)acrylate, hydroxybutyl (meth)acrylate, hydroxyethyl acrylamide, ethylene glycol monovinyl ether, tetramethylene glycol monovinyl ether, and diethylene glycol monovinyl ether; a siloxanyl group-containing itaconic acid diester monomer (C) represented by the following formula (2); a siloxanyl group-containing (meth)acrylate (D) represented by the following formula (3); and a crosslinker (E), wherein: a content ratio of the component (A) is 5 to 25% by mass; a content ratio of the component (B) is 5 to 40% by mass; a content ratio of the component (C) is 10% by mass or more and less than 30% by mass; a content ratio of the component (D) is 10 to 50% by mass; and a content ratio of the component (E) is 0.1 to 10% by mass, with respect to a total of 100% by mass of the components (A) to (E) in the monomer composition.

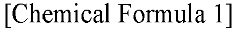

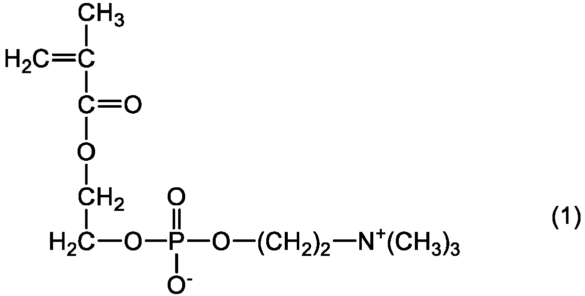

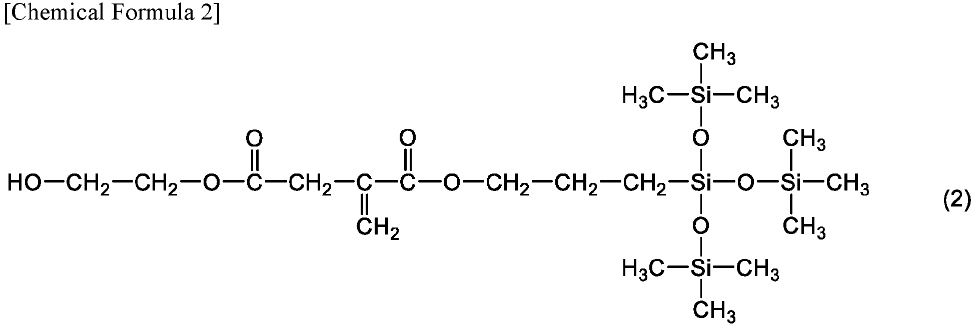

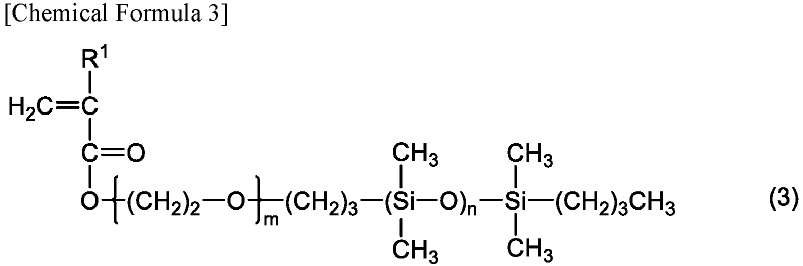

In the formula (3), R¹ is a hydrogen atom or a methyl group; m is 0 or 1; and n is 10 to 20.

According to another embodiment of the present invention, provided is a polymer for contact lens, that is a polymer of the monomer composition for contact lens.

According to still another embodiment of the present invention, provided are a contact lens containing a hydrate of the polymer for contact lens, and a production method thereof.

### ADVANTAGEOUS EFFECTS OF INVENTION

The monomer composition for contact lens of the present invention contains the components (A) to (E) at a specific ratio as essential components. Therefore, the contact lens of the present invention obtained by using the polymer of the composition can have good peelability from the mold, and can exhibit excellent elongation at break and comfort during wearing. A production method of the contact lens of the present invention can produce the above silicone hydrogel soft contact lens having excellent performance.

### DESCRIPTION OF EMBODIMENTS

A monomer composition for contact lens of the present invention is a uniform transparent liquid that contains components (A) to (E) to be described later as essential components, and may further contain one or more of components (F) to (H) to be described later as optional components. A polymer for contact lens of the present invention is a polymer of the monomer composition for contact lens, and a contact lens of the present invention contains a hydrate of the polymer for contact lens. Hereinafter, the monomer composition for contact lens of the present invention is simply referred to as a composition. The polymer for contact lens of the present invention is simply referred to as a polymer.

### Component (A): Phosphorylcholine Group-Containing Methacrylic Ester Monomer

The component (A) is a phosphorylcholine group-containing methacrylic ester monomer represented by the following formula (1), specifically 2-methacryloyloxyethyl phosphorylcholine (MPC). The composition for contact lens of the present invention contains the component (A), which makes it possible to provide good hydrophilicity and lubricity of the surface of the contact lens produced from the polymer of the composition.

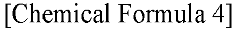

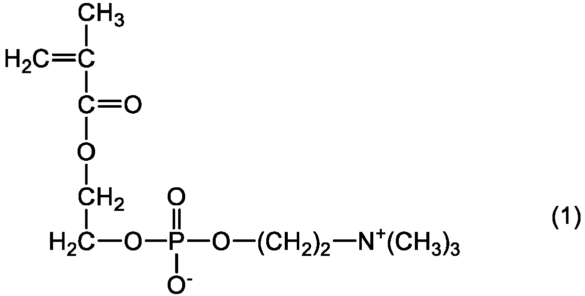

When the total of the components (A) to (E) is 100% by mass in the composition of the present invention, the content ratio of the component (A) is 5 to 25% by mass. If the content ratio of the component (A) is less than 5% by mass, the contact lens does not exhibit sufficient surface hydrophilicity. Meanwhile, if the content ratio of the component (A) exceeds 25% by mass, it is difficult to dissolve the component (A) in the composition, and the mechanical strength of the contact lens may decrease.

### Component (B): Hydroxyl Group-Containing Monomer

The component (B) is one or more hydroxyl group-containing monomers selected from the group consisting of hydroxyethyl (meth)acrylate, hydroxypropyl (meth)acrylate, hydroxybutyl (meth)acrylate, hydroxyethyl acrylamide, ethylene glycol monovinyl ether, tetramethylene glycol monovinyl ether, and diethylene glycol monovinyl ether. The composition of the present invention contains a predetermined amount of the component (B), which provides good dissolution of the component (A) in the composition. This provides good elongation at break of the contact lens to be obtained. In terms of the solubility of the component (A), the hydroxyl group of the component (B) is preferably a primary hydroxyl group. Herein, "(meth)acrylate" means "acrylate and/or methacrylate", and "(meth)acrylic" means "acrylic and/or methacrylic".

Specific examples of the component (B) include 2-hydroxyethyl acrylate, 2-hydroxyethyl methacrylate, 2-hydroxypropyl (meth)acrylate, 2-hydroxybutyl (meth)acrylate, 4-hydroxybutyl (meth)acrylate, polyethylene glycol monomethacrylate, N-(2-hydroxyethyl)acrylamide, N-methyl-N-(2-hydroxyethyl)acrylamide, ethylene glycol monovinyl ether, diethylene glycol monovinyl ether, and tetramethylene glycol monovinyl ether. The component (B) may be any one of these monomers or a mixture of two or more thereof.

In terms of better solubility of the component (A), 2-hydroxyethyl methacrylate, 2-hydroxyethyl acrylate, N-(2-hydroxyethyl)acrylamide, N-methyl-N-(2-hydroxyethyl)acrylamide, ethylene glycol monovinyl ether, and diethylene glycol monovinyl ether are preferable, and 2-hydroxyethyl acrylate, N-(2-hydroxyethyl)acrylamide, N-methyl-N-(2-hydroxyethyl)acrylamide, and ethylene glycol monovinyl ether are particularly preferable.

When the total of the components (A) to (E) is 100% by mass in the composition of the present invention, the content ratio of the component (B) is 5 to 40% by mass, preferably 10 to 35% by mass, and more preferably 10 to 25% by mass. If the content ratio of the component (B) is less than 5% by mass, the elongation at break of the contact lens to be obtained may deteriorate, so that the contact lens is brittle. Meanwhile, if the content ratio of the component (B) exceeds 40% by mass, the contact lens may be white turbid.

### Component (C): Siloxanyl Group-Containing Itaconic Acid Diester Monomer

The component (C) is a siloxanyl group-containing itaconic acid diester monomer represented by the following formula (2). The component (C) contributes to improved oxygen permeability and transparency of the contact lens.

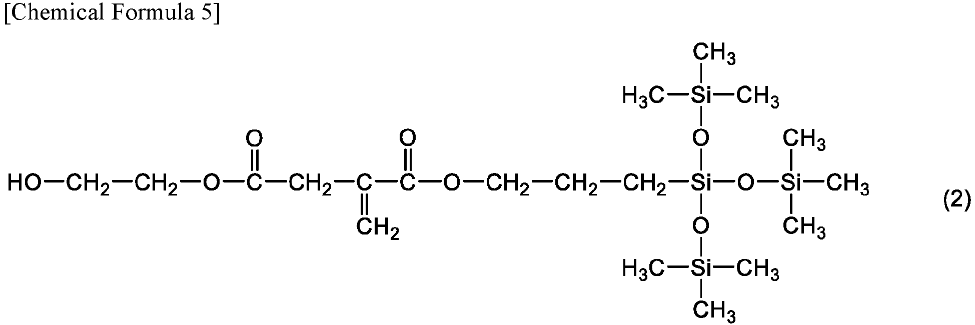

The monomer represented by the formula (2) is obtained by an esterification reaction between itaconic acid monoethylene glycol ester and 3-iodopropyl[tris(trimethylsiloxy)]silane. The itaconic acid monoethylene glycol ester is obtained, for example, by reacting itaconic anhydride with ethylene glycol, as described in Patent Literature 6. A commercially available product may be used for 3-iodopropyl[tris(trimethylsiloxy)]silane, but it is preferable to use a high-purity product in order to increase the purity of the silicone monomer of the present invention to be obtained.

In the above esterification reaction, a small amount of a structural isomer represented by the following formula (2') may be produced as a by-product. In the present invention, a mixture of the monomer of the formula (2) and a small amount of the monomer of the formula (2') may be used as the component (C). That is, in the present invention, the "siloxanyl group-containing itaconic acid diester monomer represented by the formula (2)" includes not only the monomer of the formula (2) alone but also a monomer containing in part, the isomer of the formula (2') other than the monomer of the formula (2).

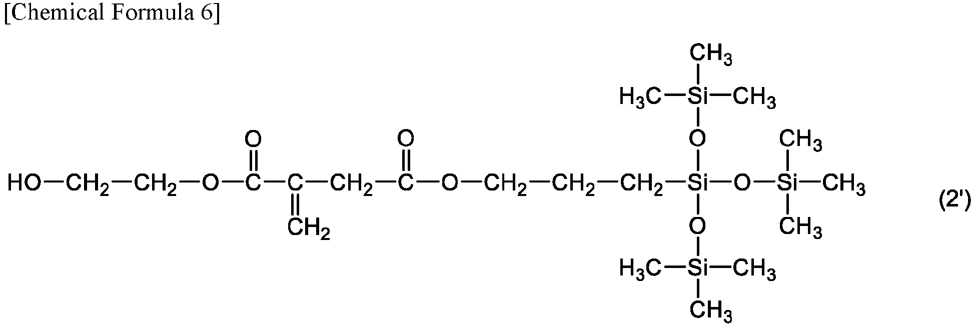

When the total of the components (A) to (E) is 100% by mass in the composition of the present invention, the content ratio of the component (C) is 10% by mass or more and less than 30% by mass, and preferably 10 to 27% by mass. If the content ratio of the component (C) is less than 10% by mass, the component (A) may be hardly dissolved in the composition of the present invention, or the polymer for contact lens to be produced may be white turbid. Meanwhile, if the content ratio of the component (C) is 30% by mass or more, the elongation at break of the contact lens may decrease.

### Component (D): Siloxanyl Group-Containing (Meth)Acrylate

The component (D) is a siloxanyl group-containing (meth)acrylate represented by the following formula (3). The component (D) contributes to improved oxygen permeability of the contact lens and adjusted mechanical strength. The component (D) can be prepared by a method disclosed in Japanese Unexamined Patent Publication No. 2014-031338, and the like, or may be a commercially available product.

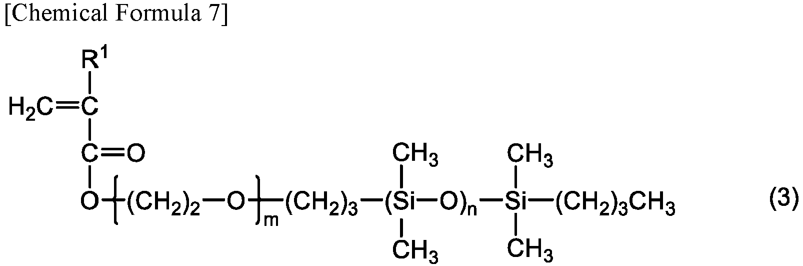

In the formula (3), R¹ is a hydrogen atom or a methyl group. m represents the number of oxyethylene groups, and is an integer of 0 or 1. n represents the number of repetitions of a dimethylsiloxane moiety, which is 10 to 20.

The component (D) may be a mixture of a plurality of compounds having different numbers of repetitions n. In this case, n is an average value of number average molecular weights, and is within the range of 10 to 20. If n is less than 10, oxygen permeability deteriorates, which is not preferable. When n is more than 20, the surface hydrophilicity and mechanical strength of the contact lens decrease.

It is preferable that m in the formula (3) is 0. That is, the component (D) is preferably a siloxanyl group-containing (meth)acrylate represented by the following formula (4). R¹ and n in the formula (4) are synonymous with those in the formula (3).

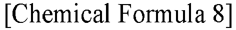

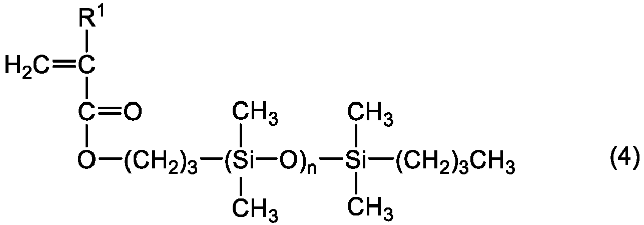

When the total of the components (A) to (E) is 100% by mass in the composition of the present invention, the content ratio of the component (D) is 10 to 50% by mass. If the content ratio of the component (D) is less than 10% by mass, the mechanical strength of the contact lens becomes too large, so that comfort during wearing may not be excellent. Meanwhile, if the content ratio of the component (D) exceeds 50% by mass, the elongation at break of the contact lens may decrease.

When the total of the components (A) to (E) is 100% by mass in the composition of the present invention, the total content ratio of the components (C) and (D) is preferably 35 to 75% by mass, and more preferably 55 to 70% by mass. The total content ratio is set to 35% by mass or more, which is likely to provide the composition of the present invention as a uniform transparent liquid. Meanwhile, the total content ratio is set to 75% by mass or less, which makes it possible to prevent the contact lens from becoming brittle.

### Component (E): Crosslinker

The component (E) is a component that acts as a crosslinker during the polymerization reaction of the monomers of the components (A) to (D). Since the composition of the present invention contains a predetermined amount of the component (E), the polymer of the present invention has a crosslinked structure, and therefore the contact lens of the present invention exhibits excellent solvent resistance.

An example of the component (E) is silicone dimethacrylate represented by the following formula (5).

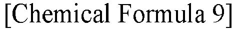

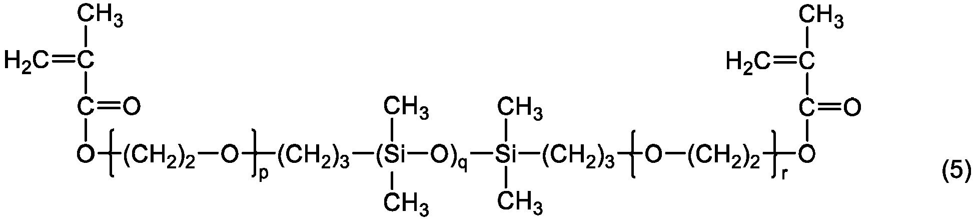

In the formula (5), p and r are 0 or 1. q is 10 to 70.

Other specific examples of the component (E) include ethylene glycol divinyl ether, diethylene glycol divinyl ether, triethylene glycol divinyl ether, methylene bisacrylamide, allyl methacrylate, (2-allyloxy)ethyl methacrylate, 2-(2-vinyloxyethoxy)ethyl acrylate, tetraethylene glycol dimethacrylate, and 2-(2-vinyloxyethoxy)ethyl methacrylate. The component (E) may be any one of these crosslinkers or a mixture of two or more thereof.

When the total of the components (A) to (E) is 100% by mass in the composition of the present invention, the content ratio of the component (E) is 0.1 to 10% by mass, and preferably 0.7 to 6% by mass. If the content ratio of the component (E) is less than 0.1% by mass, the solvent resistance of the contact lens becomes insufficient. Meanwhile, if the content ratio of the component (E) exceeds 10% by mass, the contact lens may be brittle and damaged, and the mechanical strength becomes too high, which may cause deteriorated comfort during wearing of the contact lens.

### Component (F): Monomer Other Than Components (A) to (E)

The component (F) is a monomer other than the components (A) to (E). The component (F) is an optional component, and is used for the purpose of adjusting the water content ratio of the contact lens.

As the component (F), a monomer having one or more functional groups selected from an amide group, a carboxyl group, and an ester group can be exemplified, and a monomer having an amide group or an ester group is preferable. Examples of the monomer having an amide group include N-vinylpyrrolidone, N-vinylpiperidin-2-one,N-vinyl-ε-caprolactam, N-vinyl-3-methyl-2-caprolactam, N,N-dimethylacrylamide, N,N-diethylacrylamide, acrylamide, N-isopropylacrylamide, acryloylmorpholine, N-vinyl-N-methylacetamide, N-vinylacetamide, and N-vinylformamide, of which N-vinylpyrrolidone is preferable. Examples of the monomer having a carboxyl group include (meth)acrylic acid and 2-methacryloyloxyethyl succinic acid. Examples of the monomer having an ester group include alkyl (meth)acrylates such as methyl (meth)acrylate, ethyl (meth)acrylate and butyl (meth)acrylate, and methoxypolyethylene glycol methacrylate, of which methyl (meth)acrylate is preferable. The component (F) may be any one of the monomers or a mixture of two or more thereof. That is, the component (F) may be one or more monomers selected from the group of the monomers.

When the composition of the present invention contains the component (F), the content ratio of the component (F) is preferably 200 parts by mass or less, more preferably 150 parts by mass or less, and still more preferably 120 parts by mass or less, with respect to the total amount of 100 parts by mass of the components (A) to (E). If the content ratio of the component (F) is 200 parts by mass or less, the solubility of the component (A) in the composition is good, and the elongation at break of the contact lens is likely to be kept at a certain level or more.

### Component (G): Solvent Having Hydroxyl Group

The component (G) is a solvent having a hydroxyl group. The component (G) is an optional component, and may be blended for the purpose of further improving the solubility of the component (A) in the composition. The use of the component (G) provides an increased dissolution rate of the component (A) in the composition of the present invention, which can facilitate the dissolution thereof.

The solvent having a hydroxyl group as the component (G) may be alcohols or carboxylic acids. Specific examples of the alcohols include ethanol, 1-propanol, 2-propanol, 1-butanol, 2-butanol, tert-butanol, 1-pentanol, 2-pentanol, tert-amyl alcohol, 1-hexanol, 1-octanol, 1-decanol, and 1-dodecanol. Specific examples of the carboxylic acids include glycolic acid, lactic acid, and acetic acid. The component (G) may be any one of these solvents or a mixture of two or more thereof. In terms of the solubility of the component (A) and the pH stability of the composition, the component (G) is particularly preferably one or more selected from ethanol, 1-propanol, 2-propanol, and 1-hexanol.

When the composition of the present invention contains the component (G), the content ratio of the component (G) is preferably 50 parts by mass or less when the total of the components (A) to (E) in the composition is 100 parts by mass. If the content ratio of the component (G) is 50 parts by mass or less, the strength of the polymer to be produced is not insufficient, and the elongation at break of the contact lens is likely to be kept at a certain level or more.

### Component (H): Polymerization Initiator

The composition of the present invention may contain a polymerization initiator as the component (H). When the composition contains the component (H), it is necessary to note the storage of the composition, and the like, but advantageously, only the heating or the like of the composition can easily provide the polymer with stable quality.

The component (H) may be a known polymerization initiator, and is preferably a thermal polymerization initiator. If the thermal polymerization initiator is used, the copolymerizability of each monomer component due to a temperature change during polymerization is easily changed.

Examples of the thermal polymerization initiator include azo-based polymerization initiators such as 2,2'-azobisisobutyronitrile, dimethyl 2,2-azobis(2-methylpropionate), 2,2'-azobis[2-(2-imidazolin-2-yl)propane]dihydrochloride, 2,2'-azobis(2,4-dimethylvaleronitrile), 2,2'-azobis[2-(2-imidazolin-2-yl)propane] disulfate dihydrate, 2,2'-azobis(2-methylpropion amidine)dihydrochloride, 2,2'-azobis [N-(2-carboxyethyl)-2-methylpropion amidine]dihydrate, 2,2'-azobis[2-(2-imidazolin-2-yl)propane], 2,2'-azobis(1-imino-1-pyrrolidino-2-methylpropane)dihydrochloride, 2,2'-azobis[2-methyl-N-{1,1-bis(hydroxymethyl)-2-hydroxyethyl}propionamide], 2,2'-azobis[2-methyl-N-(2-hydroxyethyl)propionamide], 2,2'-azobis(2-methylpropion amidine)dihydrochloride, and 2,2'-azobis[2-methyl-N-(2-hydroxyethyl)propionamide], and peroxide-based polymerization initiators such as benzoyl peroxide, t-butyl hydroperoxide, cumenehydroperoxide, lauroyl peroxide, t-butylperoxyhexanoate, and 3,5,5-trimethylhexanoyl peroxide.

As the component (H), any one of these polymerization initiators may be blended, or two or more thereof may be blended. As the component (H), an azo-based polymerization initiator is preferable in terms of safety and availability, and 2,2'-azobisisobutyronitrile, dimethyl 2,2-azobis(2-methyl propionate), and 2,2'-azobis(2,4-dimethylvaleronitrile) are particularly preferable in terms of reactivity.

When the composition contains the component (H), the content ratio thereof is preferably 0.1 to 3 parts by mass, and more preferably 0.2 to 1 part by mass, with respect to the total amount of 100 parts by mass of the components (A) to (E) in the composition. When the content ratio is less than 0.1 parts by mass, the polymerizability of the composition is insufficient, which may not provide an advantage of blending the component (H). When the content ratio exceeds 3 parts by mass, the extraction and removal of the reactive decomposition product of the component (H) may be insufficient when the polymer is cleaned to produce the contact lens.

The composition of the present invention may contain components used in the contact lens such as an ultraviolet absorber and a dye as long as the object of the present invention is not impaired. The content ratios of the other components in the composition are preferably 5 parts by mass or less, and more preferably 3 parts by mass or less, with respect to the total amount of 100 parts by mass of the components (A) to (E) in the composition.

A production method of the composition of the present invention is not particularly limited. For example, by charging components into a stirring (mixing) apparatus in any order or collectively, and stirring (mixing) the components at a temperature of 40°C or lower until a uniform mixture is obtained, the composition can be produced. However, when the composition contains a thermal polymerization initiator as the component (H), it is preferable to mix the components at a temperature which is 40°C or lower and at least 10°C lower than the 10-hour half-life temperature of the thermal polymerization initiator in order to prevent the polymerization reaction from starting during mixing. In terms of good solubility of the component (A), it is preferable to mix and dissolve the three components (A), (B), and (C), and then add the other components, followed by mixing.

The polymer of the present invention is a polymer of the above composition of the present invention. When the composition does not contain the component (H), it is preferable to add a polymerization initiator to the composition for a polymerization reaction. Examples of the polymerization initiator to be added include the same as the above examples of the component (H). When the composition contains the component (G), the polymer may contain the component (G).

Hereinafter, a production method of the polymer of the present invention will be described. The production method to be shown below is only one embodiment of a method for obtaining the polymer, and the polymer of the present invention is not limited to that obtained by the production method.

The polymer of the present invention can be produced by filling a mold with the composition of the present invention for a polymerization reaction. As the mold, a mold having a hydrophobic surface made of polypropylene or the like may be used. When the composition does not contain the component (H), it is preferable to add a polymerization initiator similar to the component (H) to the composition so that the blending amount of the polymerization initiator is substantially equal to that of the component (H), and fill the mold with the composition.

The polymerization reaction may be performed by, for example, a single-stage polymerization method in which the composition is maintained at a temperature of 45°C to 140°C for 1 hour or more according to the decomposition temperature of the polymerization initiator to be used, but the polymerization reaction is preferably carried out by a polymerization method of two or more stages including a polymerization step 1 and a polymerization step 2 to be shown below. In this case, the hydrophilicity of the surface of the contact lens can be further improved. After the completion of the polymerization, the polymer may be cooled to, for example, 60°C or lower, and removed from the mold.

### [Polymerization Step 1]

In the polymerization step 1, the polymerization initiator is added to the composition as necessary, and the composition is maintained at a temperature of 45°C to 75°C for 1 hour or more.

The maintenance temperature (polymerization temperature) of the polymerization step 1 is 45 to 75°C, preferably 50°C to 70°C, and more preferably 55°C to 70°C. When the polymerization temperature of the polymerization step 1 is lower than 45°C, the amount of radicals generated from the polymerization initiator is small, so that the physical properties of the polymer are not stable, which may cause unstable quality of the polymer. When the polymerization temperature of the polymerization step 1 is higher than 75°C, a rate at which a hydrophilic monomer in polymerization and/or a hydrophilic moiety during polymerization are/is oriented at the interface between the composition and the mold may be low. As a result, the surface hydrophilicity of the contact lens may deteriorate.

The maintenance time (polymerization time) of the polymerization step 1 is 1 hour or longer, and preferably 2 hours or longer and 12 hours or shorter. If the polymerization time is shorter than 1 hour, the rate at which the hydrophilic monomer and/or the hydrophilic moiety in the process of polymerization are/is oriented at the interface between the composition and the mold may be low. As a result, the surface hydrophilicity of the contact lens to be produced may deteriorate. When the polymerization time exceeds 12 hours, the polymerization step becomes too long, so that the productivity decreases, which is not preferable. The maintenance time does not include a temperature rising time until the above polymerization temperature is reached.

### [Polymerization Step 2]

The polymerization step 2 is carried out after the polymerization step 1, and is a step of maintaining a temperature at 90°C to 140°C, which is higher than that of the polymerization step 1, for 1 hour or longer.

The maintenance temperature (polymerization temperature) of the polymerization step 2 is 90 to 140°C, and preferably 100°C to 120°C. The polymerization reaction may not be completed at temperatures lower than 90°C. At temperatures exceeding 140°C, the mold is deformed, so that the polymer may also be deformed in association with the deformation. As a result, there is a concern that the shape of the contact lens is abnormal.

The maintenance time (polymerization time) of the polymerization step 2 is 1 hour or longer, and preferably 10 hours or shorter. If the polymerization time is shorter than 1 hour, the polymerization reaction may not be completed. When the polymerization time exceeds 10 hours, the polymerization step becomes too long to cause deteriorated productivity, which is not preferable. As with the polymerization step 1, this maintenance time does not include the temperature rising time.

An atmosphere in which the polymerization steps 1 and 2 are performed is not particularly limited, but it is preferable to perform both the polymerization steps 1 and 2 in an inert gas atmosphere such as a nitrogen or argon atmosphere in terms of improving a polymerization rate. In this case, an inert gas may be passed through the composition, or the filling location of the composition in the mold may be in the inert gas atmosphere.

A pressure in the mold may be an atmospheric pressure or a slight pressure. In the case of the polymerization in the inert gas atmosphere, a gauge pressure is preferably 1 kgf/cm² or less.

The contact lens of the present invention is a silicone hydrogel contact lens, and contains a hydrate of the polymer. That is, the contact lens of the present invention (silicone hydrogel contact lens) is obtained by hydrating the polymer of the present invention and causing the polymer to contain water to form a hydrogel form. Herein, the "silicone hydrogel" refers to a hydrogel having a silicone moiety in a polymer. Since the composition of the present invention contains the components (C) and (D) which are silicone-containing monomers, the polymer thereof has the silicone moiety, and hydrated (is caused to contain water), whereby the silicone hydrogel can be formed.

The water content ratio of the contact lens (the ratio of water to the total mass of the contact lens) is preferably 35% by mass or more and less than 65% by mass, and more preferably 40% by mass or more and 60% by mass or less. If the water content ratio is less than 35% by mass, it is difficult to obtain the hydrophilicity of the contact lens, and if the water content ratio is 65% or more, there is a concern that high oxygen permeability is not obtained.

Next, a production method of a contact lens of the present invention will be described. A production method to be shown below is only one embodiment of a method for obtaining a contact lens of the present invention, and the contact lens of the present invention is not limited to that obtained by the production method.

After the above polymerization reaction, a polymer may be in a state of a mixture with an unreacted monomer component (unreacted product), a residue of each component, a by-product, or a residual solvent or the like. It is possible to subject such a mixture to hydration treatment as it is, but it is preferable to purify the polymer using a purification solvent before the hydration treatment.

Examples of the purification solvent include water, methanol, ethanol, 1-propanol, 2-propanol, and mixtures thereof. The purification can be carried out, for example, by immersing the polymer in an alcohol solvent at a temperature of 10°C to 40°C for 10 minutes to 5 hours, and then immersing the polymer in water for 10 minutes to 5 hours. The polymer may be immersed in the alcohol solvent, then immersed in an aqueous alcohol having an alcohol concentration of 20 to 50% by weight for 10 minutes to 5 hours, and further immersed in water. As the water, pure water and ion-exchanged water and the like are preferable.

The contact lens of the present invention is obtained by immersing the purified polymer in a normal saline solution to hydrate the polymer so as to have a predetermined water content ratio. The normal saline solution may be a boric acid buffered normal saline solution or a phosphate buffered saline solution or the like. The polymer may be immersed in a preservative solution for soft contact lens containing a normal saline solution. The osmotic pressure of the normal saline solution is preferably 250 to 400 mOms/kg in terms of hydration.

The contact lens of the present invention has a surface having good hydrophilicity so that stains such as lipids are less likely to adhere to the surface, is easily cleaned to remove the stains even when the stains adhere to the surface, and has excellent mechanical strength, whereby the contact lens can be optionally used for about one month in a normal usage form. Of course, the contact lens may be replaced in a shorter period of time.

### Examples

Hereinafter, the present invention will be specifically described with reference to Examples, but the present invention is not limited to these Examples. First, components used in Examples and Comparative Examples will be shown below.

### Component (A): Phosphorylcholine Group-Containing Methacrylic Ester Monomer

- MPC: (2-methacryloyloxyethyl)phosphorylcholine

### Component (B): Hydroxyl Group-Containing Monomer

- HEA: 2-Hydroxyethyl acrylate
- HEAA: N-(2-hydroxyethyl)acrylamide
- HPMA: 2-Hydroxypropyl methacrylate
- HBMA: 2-Hydroxybutyl methacrylate
- EMVE: Ethylene glycol monovinyl ether
- TMMVE: Tetramethylene glycol monovinyl ether
- DEMVE: Diethylene glycol monovinyl ether

### Component (C): Siloxanyl Group-Containing Itaconic Acid Diester Monomer

- ETS: Compound of the formula (2) that is an esterification reaction product of itaconic acid monoethylene glycol ester and 3-iodopropyl[tris(trimethylsiloxy)]silane.

### Component (D): Syroxanyl group-containing methacrylate

- FM-0711: Compound represented by the formula (3) (R¹ = methyl group, m = 0, n = 11, number average molecular weight Mn = about 1,000)

### Component (E): Crosslinker

- TEGDV: Triethylene glycol divinyl ether
- DEGDV: Diethylene glycol divinyl ether
- EGDV: Ethylene glycol divinyl ether
- TEGDMA: Tetraethylene glycol dimethacrylate
- FM-7711: Compound represented by the formula (5) (p = r = 0, number average molecular weight Mn = about 1,000)

### Component (F): Monomer Other Than Components (A) to (E)

- NVP: N-Vinylpyrrolidone
- MMA: Methyl methacrylate

### Component (G): Solvent

- NPA: 1-propanol (normal propyl alcohol)
- HeOH: 1-hexanol (normal hexanol)

### Component (H): Polymerization Initiator

- AIBN: 2,2'-azobis(isobutyronitrile) (10-hour half-life temperature: 65°C)

Compositions, polymers, and contact lenses (model contact lenses) of Examples and Comparative Examples were evaluated for the following items. Hereinafter, the "composition", the "polymer" and the "contact lens (model contact lens)" in each evaluation item and each Table include those related to not only Examples but also Comparative Examples.

### [Uniformity and Transparency of Composition]

The composition was placed in a colorless and transparent container, and the state of the composition was visually evaluated according to the following criteria.
Good: Uniform transparency
Poor: White turbidity or precipitation

### [Form of Polymer]

The form of the polymer was visually evaluated according to the following criteria.
Good: Solid
Poor: Liquid (including viscous liquid)

### [Transparency of Polymer]

The transparency of the polymer was visually evaluated according to the following criteria.
Good: Transparency
Average: Slight turbidity
Poor: White turbidity

### [Peelability of Polymer]

A monomer composition containing an initiator was placed in a polymerization cell (25 mm × 70 mm × 0.2 mm) including two polypropylene plates with a 0.2-mm-thick PET film as a spacer, polymerized, and cured. Then, one of the two polypropylene plates was peeled off. The condition of the polymer when 10 plates were peeled off was visually evaluated.

Good: the number of polymers with cracks and chips among ten polymers is 2 or less.

Average: the number of polymers with cracks and chips among ten polymers is 3 or more and 5 or less.

Poor: the number of polymers with cracks and chips among ten polymers is 6 or more.

### [Transparency of Contact Lens]

After the polymer was purified, a hydrogel obtained by immersing and swelling the polymer in a normal saline solution described in ISO-18369-3 was used as a model contact lens, and visually evaluated according to the following criteria.
Good: Transparency
Average: Slight turbidity
Poor: White turbidity

### [Mechanical Strength and Elongation at Break of Contact Lens]

Using a BAS-3305 (W) breaking strength analyzer manufactured by YAMADEN Co., Ltd., a modulus [MPa] of the model contact lens was measured according to JIS-K7127, and mechanical strength was evaluated. In detail, a measurement sample obtained by cutting a model contact lens to a width of 2 mm was used. A load cell of 200 gf was used to pull the measurement sample at a speed of 1 mm/sec with a distance between clamps being set to 6 mm, and a modulus was measured from an initial stress. When the modulus was 0.2 MPa or more and less than 0.7 MPa, the mechanical strength was determined to be good. A distance until the measurement sample was broken was measured. An elongation rate with respect to a sample length of 6 mm was taken as elongation at break [%], and evaluated according to the following criteria.
Very Good: 350% or more
Good: 200% or more and less than 350%
Poor: Less than 200%

### [Surface Lubricity of Contact Lens]

The lubricity of the model contact lens was evaluated by sensory evaluation with fingertips. Polymacon and omafilcon A were used as standard contact lenses for evaluation. Evaluation was made at ten stages of 1 to 10 with the lubricities of polymacon and omafilcon A being respectively taken as 2 and 8. When the evaluation score is 7 or more, the surface lubricity is determined to be good; when the evaluation score is 4 to 6, the surface lubricity is determined to be average; and when the evaluation score is 3 or less, the surface lubricity is determined to be poor.

### [Example 1]

0.5 g (5.0% by mass) of MPC, 1.85 g (18.5% by mass) of HPMA, 1.23 g (12.3% by mass) of EMVE, 2.96 g (29.6% by mass) of ETS, and 0.62 g (6.2 parts by mass) of NPA were mixed in a container, followed by stirring at room temperature until the MPC was dissolved. Furthermore, 3.34 g (33.4% by mass) of FM-0711, 0.12 g (1.2% by mass) of TEGDV, 2.47 g (24.7 parts by mass) of NVP, and 0.12 g (1.2 parts by mass) of AIBN were added to the container, followed by stirring at room temperature until a uniform mixture was obtained, to obtain a composition. This composition was subjected to the above evaluation.

0.3 g of the above composition was poured into a cell of 25 mm × 70 mm × 0.2 mm in which a 0.1-mm-thick polyethylene terephthalate sheet as a spacer was sandwiched between two polypropylene plates, and the cell was placed in an oven. Nitrogen substitution was performed in the oven. Then, a temperature in the oven was raised to 65°C, and maintained for 3 hours. Then, the temperature was raised to 120°C, and maintained for 1 hour, to polymerize the composition, thereby obtaining a polymer. The polymer was taken out of the cell, and subjected to the above evaluations.

The polymer was immersed in 40 g of 2-propanol for 4 hours, and then immersed in 50 g of ion-exchanged water for 4 hours to remove unreacted substances and the like for purification. The purified polymer was immersed in the normal saline solution described in ISO-18369-3, and swollen (hydrated) to produce a model contact lens. This model contact lens was processed into a sample having a size and shape suitable for each evaluation test, and subjected to each evaluation. Table 1 shows the blending ratios of components in the composition, the polymerization conditions, and the evaluation results.

### [Examples 2 to 11]

Compositions, polymers, and model contact lenses of Examples 2 to 11 were prepared and evaluated in the same manner as in Example 1 except that the content ratios of components and the polymerization conditions were changed as shown in Table 1. The results are shown in Table 1.

### [Comparative Example 1]

2.22 g (22.2% by mass) of MPC, 1.48 g (14.8% by mass) of HPMA, 6.18 g (61.8% by mass) of ETS, and 1.23 g (12.3 parts by mass) of NPA were mixed in a container, followed by stirring at room temperature. Furthermore, 0.12 g (1.2% by mass) of TEGDV, 2.47 g (24.7 parts by mass) of NVP, and 0.12 g (1.2 parts by mass) of AIBN were added to the container, followed by stirring at room temperature until a uniform mixture was obtained, to obtain a composition of Comparative Example 1. The composition of Comparative Example 1 was subjected to the above evaluations.

0.3 g of the above composition was poured into a cell of 25 mm × 70 mm × 0.2 mm in which a 0.1-mm-thick polyethylene terephthalate sheet as a spacer was sandwiched between two polypropylene plates, and the cell was placed in an oven. Nitrogen substitution was performed in the oven. Then, a temperature in the oven was raised to 65°C, and maintained for 1 hour. Then, the temperature was raised to 120°C, and maintained for 5 hours, to polymerize the composition, thereby obtaining a polymer of Comparative Example 1. The polymer was taken out of the cell, and subjected to the above evaluations. When the polypropylene plate was peeled off, four polymers among ten polymers were damaged.

The polymer of Comparative Example 1 was immersed in 40 g of 2-propanol for 4 hours, and then immersed in 50 g of ion-exchanged water for 4 hours to remove unreacted substances and the like for purification. The purified polymer was immersed in the normal saline solution described in ISO-18369-3, and swollen (hydrated) to produce a model contact lens of Comparative Example 1. This model contact lens was processed into a sample having a size and shape suitable for each evaluation test, and subjected to each evaluation. Table 2 shows blending ratios of components in the composition of Comparative Example 1, polymerization conditions, and evaluation results.

The polymer of Comparative Example 1 had poorer transparency and peelability than those of the polymer of each Example. The contact lens of Comparative Example 1 had much poorer transparency and elongation at break, and poorer surface lubricity than those of the contact lens of each Example.

### [Comparative Examples 2 to 4]

Compositions, polymers, and model contact lenses of Comparative Examples 2 to 4 were prepared and subjected to evaluation tests in the same manner as in Comparative Example 1 except that content ratios of components and polymerization conditions were changed as shown in Table 2. The results are shown in Table 2. In Comparative Example 3, the composition was not uniform, so that polymerization was not carried out. Therefore, the polymer and the model contact lens of Comparative Example 3 could not be prepared, and could not be evaluated.

The polymer of Comparative Example 2 had poorer peelability than that of the polymer of each Example. The contact lens of Comparative Example 2 had much poorer elongation at break and poorer surface lubricity than those of the contact lens of each Example. The polymer and contact lens of Comparative Example 4 were much poorer than those of each Example as with Comparative Example 1.

**[Table 1]**

| | | | | Exam ple 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|
| Compositions | Monomer components*! (% by mass) | A | MPC | 5.0 | 19.9 | 19.7 | 10.0 | 13.2 | 6.2 | 10.0 | 18.7 | 18.6 | 25.0 | 5.0 |
| | | B | HEA | - | 19.9 | 13.2 | 10.0 | - | - | 10.0 | - | - | - | - |
| | | | HEAA | - | - | - | - | - | - | - | - | - | - | 1.0 |
| | | | HPMA | 18.5 | 9.9 | - | - | - | 12.5 | 5.0 | 5.3 | - | 18.8 | 13.5 |
| | | | HBMA | - | - | - | - | 6.6 | - | - | - | 18.6 | - | - |
| | | | EMVE | 12.3 | - | - | 18.0 | - | - | 15.0 | - | - | - | 16.3 |
| | | | TMMVE | - | - | - | - | - | 18.7 | - | - | - | - | - |
| | | | DEMVE | - | 9.9 | - | - | 13.2 | - | - | - | - | - | - |
| | | C | ETS | 29.6 | 19.9 | 26.3 | 20.0 | 26.3 | 12.5 | 10.0 | 28.0 | 24.8 | 25.0 | 29.6 |
| | | D | FM-0711 | 33.4 | 19.9 | 39.5 | 40.0 | 39.4 | 50.0 | 40.0 | 40.0 | 37.4 | 24.9 | 33.4 |
| | | E | TEGDV | 1.2 | - | 1.3 | 2.0 | 1.3 | - | - | 1.3 | - | 1.3 | 1.2 |
| | | | DEGDV | - | 0.7 | - | - | - | - | - | - | - | - | - |
| | | | EGDV | - | - | - | - | - | - | - | - | 0.6 | - | - |
| | | | TEGDMA | - | - | - | - | - | 0.1 | - | - | - | - | - |
| | | | FM-7711 | - | - | - | - | - | - | 10.0 | 6.7 | - | 5.0 | - |
| | Total of monomers (% by mass) | | | 100.0 | 100.0 | 100.0 | 100.0 | 100.0 | 100.0 | 100.0 | 100.0 | 100.0 | 100.0 | 100.0 |
| | Other monomers (part by mass) | F | NVP | 24.7 | - | 32.9 | 80.0 | 32.9 | 15.0 | - | 26.7 | 24.8 | 31.3 | 24.7 |
| | | | MMA | - | - | 19.7 | 40.0 | 19.7 | 10.0 | - | 5.0 | 6.2 | - | - |
| | Other Components*2 (part by mass) | G | NPA | 6.2 | - | - | 30.0 | - | - | - | - | - | - | 6.2 |
| | | | HeOH | - | 9.9 | 32.9 | - | 13.2 | 15.0 | 20.0 | 26.7 | - | 50.0 | 6.2 |
| | | H | AIBN | 1.2 | 1.0 | 0.5 | 1.0 | 1.3 | 1.0 | 1.0 | 0.9 | 1.2 | 0.2 | 1.2 |
| Polymerization | Step1 | Temperature (°C) | | 65 | 65 | 55 | 65 | 65 | 65 | 65 | 65 | 65 | 65 | 65 |
| | | Time (hrs) | | 3 | 2 | 1 | 3 | 10 | 5 | 3 | 7 | 3 | 3 | 3 |

| conditions | Step2 | Temperature (°C) | | 120 | 110 | 110 | 100 | 110 | 120 | 110 | 110 | 110 | 110 | 120 |
|---|---|---|---|---|---|---|---|---|---|---|---|---|---|---|
| | | Time (hrs) | | 1 | 2 | 1.5 | 7 | 2 | 2 | 1 | 2 | 2 | 2 | 1 |
| Evaluation | Uniform transparency of composition | | | Good | Good | Good | Good | Good | Good | Good | Good | Good | Good | Good |
| | Form of polymer | | | Good | Good | Good | Good | Good | Good | Good | Good | Good | Good | Good |
| | Transparency of polymer | | | Good | Good | Good | Good | Good | Good | Good | Good | Good | Good | Good |
| | Peelability of polymer | | | Good | Good | Good | Good | Good | Good | Good | Good | Good | Good | Good |
| | Transparency of CL*3 | | | Good | Good | Good | Good | Good | Good | Good | Good | Good | Good | Good |
| | Mechanical strength of CL (MPa) | | | 0.4 | 0.3 | 0.4 | 0.3 | 0.5 | 0.6 | 0.7 | 0.5 | 0.4 | 0.4 | 0.4 |
| | Elongation at break of CL (%) | | | Good (300) | Good (330) | Very Good (370) | Good (280) | Very Good (410) | Good (300) | Good (220) | Good (230) | Good (310) | Good (210) | Good (310) |
| | Surface lubricity of CL | | | 7 | 9 | 9 | 8 | 8 | 7 | 8 | 9 | 8 | 9 | 7 |

| | | | | | | | | | | | | | | |
|---|---|---|---|---|---|---|---|---|---|---|---|---|---|---|
| *1 Blending amounts of A to E components; based on total amount of monomer components *2 Blending amounts of F, G, and H components; with respect to 100 parts by mass of monomer components *3 Contact lens | | | | | | | | | | | | | | |

**[Table 2]**

| | | | | Comparative Example 1 | Comparative Example 2 | Comparative Example 3 | Comparative Example 4 |
|---|---|---|---|---|---|---|---|
| Compositions | Monomer components* 1 (% by mass) | A | MPC | 22.2 | 16.5 | 33.2 | 14.1 |
| | | B | HEA | - | 11.0 | - | - |
| | | | HPMA | 14.8 | - | - | - |
| | | | HBMA | - | - | - | - |
| | | | EMVE | - | - | - | - |
| | | | TMMVE | - | - | - | - |
| | | | DEMVE | - | - | - | - |
| | | C | EitaS | 61.8 | 16.5 | 44.3 | 56.3 |
| | | D | FM-0711 | - | 55.2 | 22.1 | 28.2 |
| | | E | TEGDV | 1.2 | - | 0.4 | - |
| | | | DEGDV | - | 0.8 | - | - |
| | | | EGDV | - | - | - | - |
| | | | TEGDMA | - | - | - | 1.4 |
| | | | FM-7711 | - | - | - | - |
| | Total of monomers (% by mass) | | | 100.0 | 100.0 | 100.0 | 100.0 |
| | Other monomers (part by mass) | F | NVP | 24.7 | 11.0 | 10.0 | 29.7 |
| | | | MMA | - | - | - | - |
| | Other components*2 (part by mass) | G | NPA | 12.3 | - | - | - |
| | | | HeOH | - | 33.1 | 14.9 | 19.8 |
| | | H | AIBN | 1.2 | 1.1 | 0.5 | 1.0 |
| Polymerization conditions | Step1 | Temperature (°C) | | 65 | 65 | - | 55 |
| | | Time (hrs) | | 1 | 2 | - | 2 |
| | Step2 | Temperature (°C) | | 120 | 120 | - | 120 |
| | | Time (hrs) | | 5 | 2 | - | 5 |
| Evaluation | Uniform transparency of composition | | | Good | Good | Poor | Good |
| | Form of polymer | | | Good | Good | Unevaluated | Good |
| | Transparency of polymer | | | Average | Good | | Average |
| | Peelability of polymer | | | Average | Average | | Average |
| | Transparency of CL*3 | | | Poor | Good | | Poor |
| | Mechanical strength of CL (MPa) | | | 0.6 | 0.3 | | 0.4 |
| | Elongation at break of CL (%) | | | Poor (160) | Poor (150) | | Poor (130) |
| | Surface lubricity of CL | | | 6 | 6 | | 6 |

| | | | | | | | |
|---|---|---|---|---|---|---|---|
| *1 Blending amounts of A to E components; based on total amount of monomer components *2 Blending amounts of F, G, and H components; with respect to 100 parts by mass of monomer components *3 Contact lens | | | | | | | |

## Claims

1. A monomer composition for contact lens, comprising:
a phosphorylcholine group-containing methacrylic ester monomer (A) represented by the following formula (1); 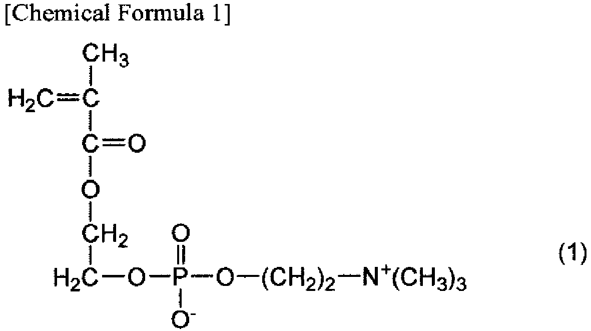
one or more hydroxyl group-containing monomers (B) selected from the group consisting of hydroxyethyl (meth)acrylate, hydroxypropyl (meth)acrylate, hydroxybutyl (meth)acrylate, hydroxyethyl acrylamide, ethylene glycol monovinyl ether, tetramethylene glycol monovinyl ether, and diethylene glycol monovinyl ether;
a siloxanyl group-containing itaconic acid diester monomer (C) represented by the following formula (2) or a mixture (C) of the siloxanyl group-containing itaconic acid diester monomer represented by the following formula (2) and an amount of a monomer represented by the following formula (2'); 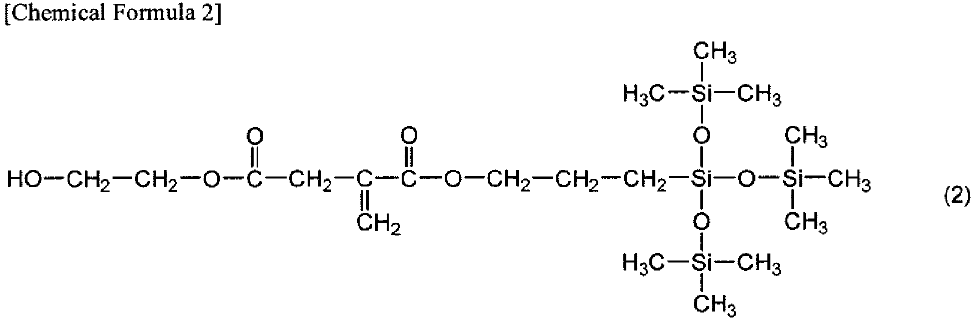 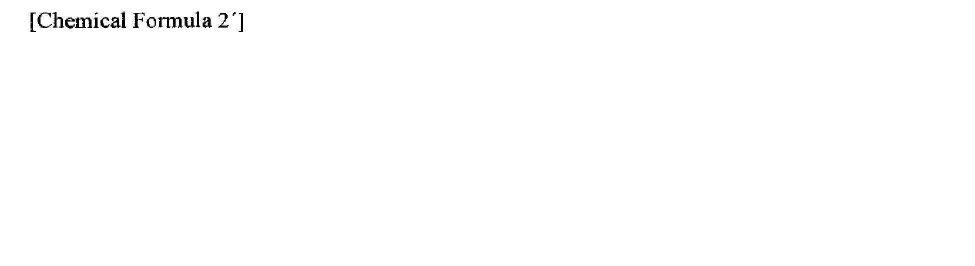 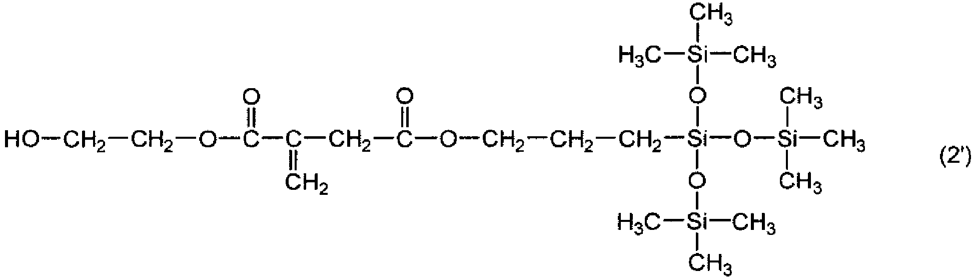
a siloxanyl group-containing (meth)acrylate (D) represented by the following formula (3), 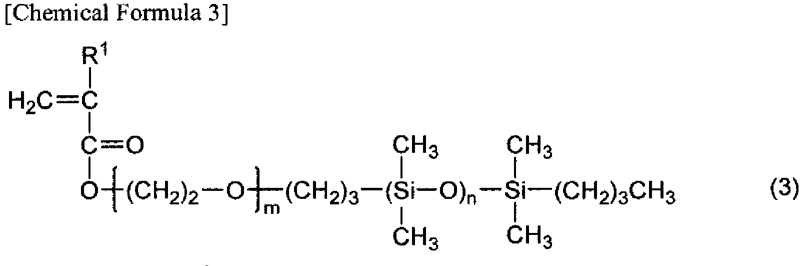
wherein: R¹ is a hydrogen atom or a methyl group; m is 0 or 1; and n is 10 to 20; and
a crosslinker (E),
**characterized in that** a content ratio of the component (A) is 5 to 25% by mass; a content ratio of the component (B) is 5 to 40% by mass; a content ratio of the component (C) is 10% by mass or more and less than 30% by mass; a content ratio of the component (D) is 10 to 50% by mass; and a content ratio of the component (E) is 0.1 to 10% by mass, with respect to a total of 100% by mass of the components (A) to (E) in the monomer composition.

2. The monomer composition according to claim 1, wherein:
the monomer composition further contains a monomer (F) other than the components (A) to (E); and a content ratio of the component (F) is 200 parts by mass or less with respect to the total amount of 100 parts by mass of the components (A) to (E) in the monomer composition.

3. The monomer composition according to claim 1 or 2, wherein:
the monomer composition further contains a solvent having a hydroxyl group (G); and a content ratio of the component (G) is 50 parts by mass or less with respect to the total amount of 100 parts by mass of the components (A) to (E) in the monomer composition.

4. A polymer for contact lens, which is a polymer of the monomer composition according to any one of claims 1 to 3.

5. A contact lens comprising
a hydrate of the polymer according to claim 4.

6. A production method of a contact lens, comprising the steps of:
mixing the polymer according to claim 4 with one or more solvents selected from the group consisting of water, methanol, ethanol, 1-propanol, and 2-propanol, to purify the polymer; and
immersing the polymer in a normal saline solution to hydrate the polymer.

## Patentansprüche

1. Eine Monomerzusammensetzung für Kontaktlinsen, umfassend:
ein Phosphorylcholingruppe-enthaltendes Methacrylestermonomer (A), dargestellt durch die folgende Formel (1); 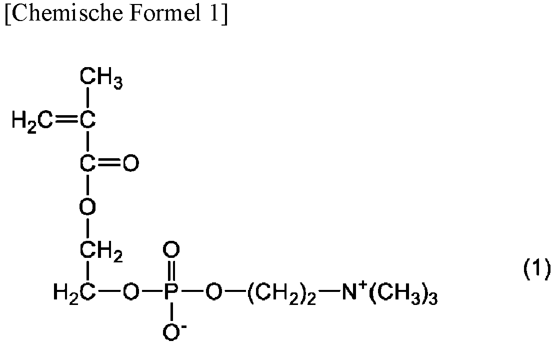
eines oder mehr Hydroxylgruppe-enthaltende Monomere (B) ausgewählt aus der Gruppe bestehend aus Hydroxyethyl(meth)acrylat, Hydroxypropyl(meth)acrylat, Hydroxybutyl(meth)acrylat, Hydroxyethylacrylamid, Ethylenglycolmonovinylether, Tetramethylenglycolmonovinylether und Diethylenglycolmonovinylether;
ein Siloxanylgruppe-enthaltendes Itaconsäurediestermonomer (C) dargestellt durch die folgende Formel (2) oder eine Mischung (C) aus dem Siloxanylgruppe-enthaltendes Itaconsäurediestermonomer dargestellt durch die folgende Formel (2) und einer Menge eines Monomers dargestellt durch die folgende Formel (2'); 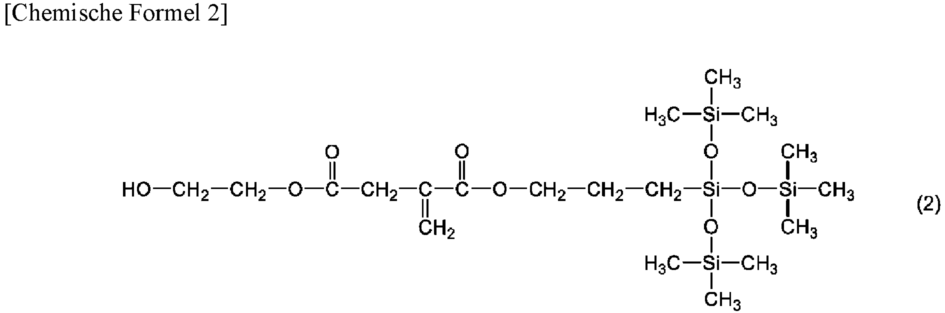 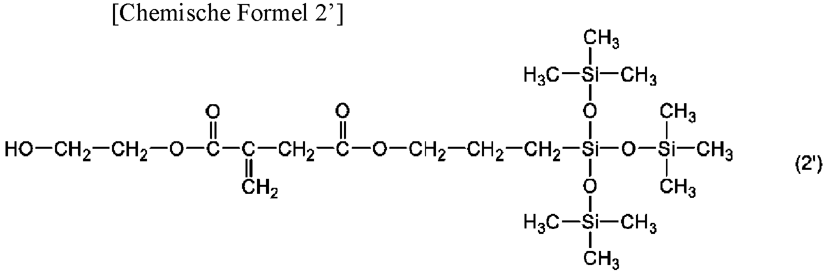
ein Siloxanylgruppe-enthaltendes (Meth)acrylat (D) dargestellt durch die folgende Formel (3), 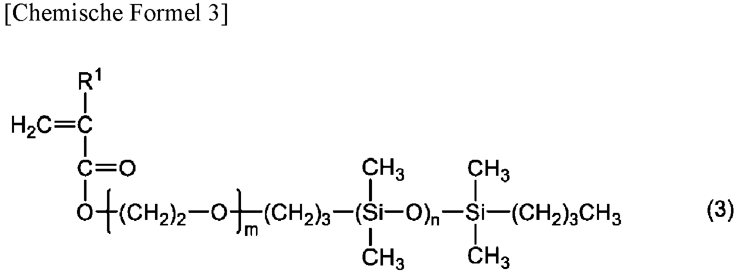
wobei: R¹ ein Wasserstoffatom oder eine Methylgruppe ist; m ist 0 oder 1; und n ist 10 bis 20; und ein Vernetzer (E),
**dadurch gekennzeichnet, dass** ein Gehaltsverhältnis des Bestandteils (A) 5 bis 25 Masse% ist; ein Gehaltsverhältnis des Bestandteils (B) ist 5 bis 40 Masse%; ein Gehaltsverhältnis des Bestandteils (C) ist 10 Masse% oder mehr und weniger als 30 Masse%; ein Gehaltsverhältnis des Bestandteils (D) ist 10 bis 50 Masse%; und ein Gehaltsverhältnis des Bestandteils (E) ist 0,1 bis 10 Masse%, bezogen auf insgesamt 100 Masse% der Bestandteile (A) bis (E) in der Monomerzusammensetzung.

2. Die Monomerzusammensetzung gemäß Anspruch 1, wobei:
die Monomerzusammensetzung des Weiteren ein Monomer (F) enthält, das sich von den Bestandteilen (A) bis (E) unterscheidet; und ein Gehaltsverhältnis des Bestandteils (F) ist 200 Masseteile oder weniger bezogen auf insgesamt 100 Masseteile der Bestandteile (A) bis (E) in der Monomerzusammensetzung.

3. Die Monomerzusammensetzung gemäß Anspruch 1 oder 2, wobei:
die Monomerzusammensetzung des Weiteren ein Lösungsmittel enthält, das eine Hydroxygruppe (G) enthält; und ein Gehaltsverhältnis des Bestandteils (G) beträgt 50 Masseteile oder weniger bezogen auf die Gesamtmenge von 100 Masseteile der Bestandteile (A) bis (E) in der Monomerzusammensetzung.

4. Ein Polymer für eine Kontaktlinse, das ein Polymer der Monomerzusammensetzung gemäß einem der Ansprüche 1 bis 3 ist.

5. Eine Kontaktline umfassend
ein Hydrat des Polymers gemäß Anspruch 4.

6. Ein Herstellungsverfahren einer Kontaktlinse, umfassend die Schritte:
Mischen des Polymers gemäß Anspruch 4 mit einem oder mehr Lösungsmitteln ausgewählt aus der Gruppe bestehend aus Wasser, Methanol, Ethanol, 1-Propanol und 2-Propanol, um das Polymer zu reinigen; und
Tauchen des Polymers in eine normale Salzlösung, um das Polymer zu hydratisieren.

## Revendications

1. Composition de monomères pour lentille de contact, comprenant :
un monomère ester méthacrylate contenant un groupe phosphorylcholine (A), représenté par la formule (1) suivante ; 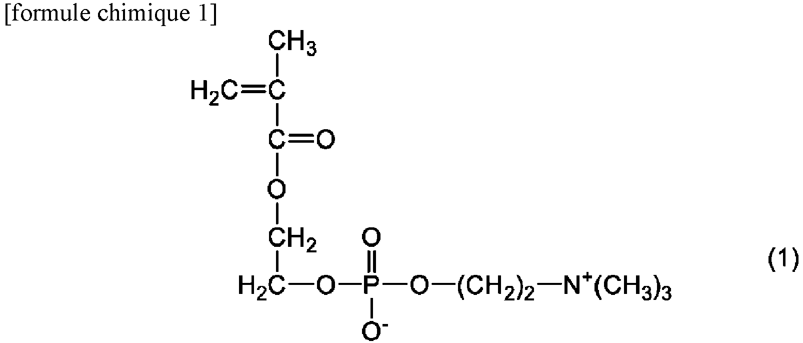
un ou plusieurs monomères contenant un groupe hydroxyle (B), choisis dans l'ensemble constitué par le (méth)acrylate d'hydroxyéthyle, le (méth)acrylate d'hydroxypropyle, le (méth)acrylate d'hydroxybutyle, l'hydroxyéthyl-acrylamide, l'éther monovinylique d'éthylèneglycol, l'éther monovinylique de tétraméthylèneglycol, et l'éther monovinylique de diéthylèneglycol ;
un monomère diester d'acide itaconique contenant un groupe siloxanyle (C), représenté par la formule (2) qui suit, ou un mélange (C) du diester d'acide itaconique contenant un groupe siloxanyle représenté par la formule (2) qui suit et d'une certaine quantité d'un monomère représenté par la formule (2') qui suit ; 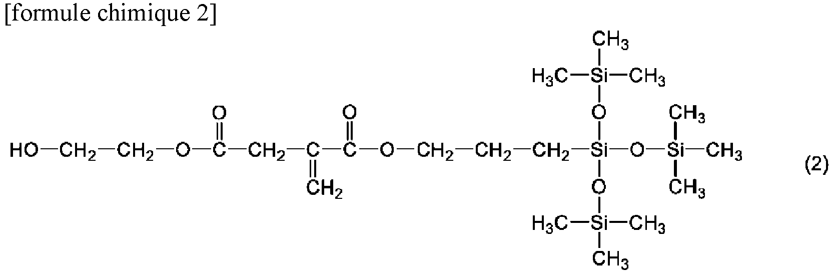 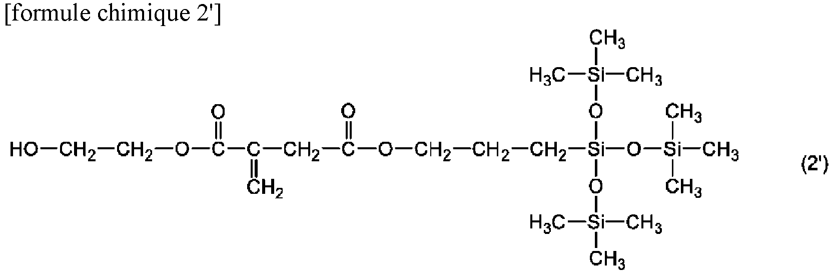
un (méth)acrylate contenant un groupe siloxanyle (D), représenté par la formule (3) suivante, 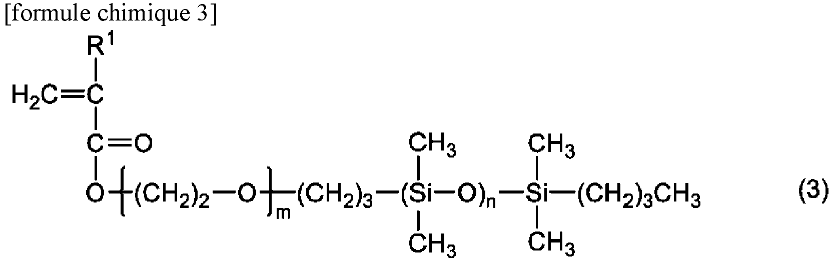
dans laquelle : R¹ est un atome d'hydrogène ou un groupe méthyle ; m vaut 0 ou 1 ; et n vaut 10 à 20 ; et
un agent de réticulation (E),
**caractérisée en ce que** la proportion en contenu du composant (A) est de 5 à 25 % en masse, la proportion en contenu du composant (B) est de 5 à 40 % en masse ; la proportion en contenu du composant (C) est de 10 % en masse ou plus et inférieure à 30 % en masse ; la proportion en contenu du composant (D) est de 10 à 50 % en masse ; et la proportion en contenu du composant (E) est de 0,1 à 10 % en masse, par rapport à un total de 100 % en masse des composants (A) à (E) dans la composition de monomères.

2. Composition de monomères selon la revendication 1, dans laquelle :
la composition de monomères contient en outre un monomère (F) autre que les composants (A) à (E) ; et la proportion en contenu du composant (F) est de 200 parties en masse ou moins par rapport à la quantité totale de 100 % en masse des composants (A) à (E) dans la composition de monomères.

3. Composition de monomères selon la revendication 1 ou 2, dans laquelle :
la composition de monomères contient en outre un solvant ayant un groupe hydroxyle (G) ; et la proportion en contenu du composant (G) est de 50 parties en masse ou moins par rapport à la quantité totale de 100 % en masse des composants (A) à (E) dans la composition de monomères.

4. Polymère pour lentille de contact, qui est un polymère de la composition de monomères selon l'une quelconque des revendications 1 à 3.

5. Lentille de contact comprenant
un hydrate du polymère selon la revendication 4.

6. Procédé de production d'une lentille de contact, comprenant les étapes de :
mélange du polymère selon la revendication 4 avec un ou plusieurs solvants choisis dans l'ensemble constitué par l'eau, le méthanol, l'éthanol, le 1-propanol, et le 2-propanol, pour purifier le polymère ; et
immersion du polymère dans une solution saline normale pour hydrater le polymère.
